# EUROPEAN PATENT SPECIFICATION

(11) **EP 2 026 420 B1**
(45) Date of publication and mention of the grant of the patent: **08.08.2018**
(21) Application number: 08007960.1
(22) Date of filing: 24.04.2008
(51) Int. Cl.: H02G 15/113, H01R 13/58

(54) **Protection box for electric connections**
Schutzkasten für elektrische Anschlüsse
Boîte de protection pour connexions électriques

(30) Priority: 10.07.2007 IT FI20070051
(43) Date of publication of application: 18.02.2009
(73) Proprietor: STEAB S.p.A., 50141 Firenze (IT)
(72) Inventor: Pini, Belisario, 50141 Firenze (IT)
(74) Representative: Strasser, Wolfgang

(56) References cited:
- EP-A1- 1 760 856
- WO-A1-94/09533
- WO-A1-96/08855
- DE-U1- 9 113 660
- GB-A- 2 329 287

## Description

The present invention relates to a protection box for electric connections.

It is known that in the construction of some kind of electric plants it is necessary to house the connectors in suitable protective casings.

WO94/09533 discloses a protection box according to the preamble of claim 1 comprising a planar member for gripping a cable. The planar member is a plate having recesses and it is designed to be held within a container that, in turn, is adapted to receive a connection terminal.

EP1760856 discloses a casing for electric connections comprising two elements which can be reciprocally coupled in a reversible or irreversible manner and delimiting an internal cavity for a terminal box or similar device and a plurality of in/out openings for one or more cables which can be connected to the terminal box or similar device.

WO9608855 discloses a protective cover assembly for electrical connectors having a cover with body cable passages.

GB2329287 discloses a cable clamp, particularly for use in telecommunication systems, comprising a circumferential ring member including on its internal surface abutment surfaces and cam surfaces and clamping elements each having an abutment surface and a cam surface.

DE9113660 U1 discloses a clamp device for electrical devices comprising a fixed jaw and a rotatable jaw.

The present invention proposes a protection box for electric connections which is particularly safe, easy and cheap to be made, and permits to lock the cables inside the protection box.

These results have been achieved according to the present invention by adopting the idea of realising a device having the features described in claim 1. Further features of the present invention are the subject of the dependent claims.

A protection box for electric connections according to the present invention is easy to use and can guarantee the effective locking of the electric wires or cables destined to be connected.

Moreover, the present invention offers the possibility of effectively protecting electric connections from water sprays or other liquids by means of a structure which is easy to realise, cheap, reliable and safe.

These and other advantages and characteristics of the invention will be best understood by anyone skilled in the art from a reading of the following description in conjunction with the attached drawings given as a practical exemplification of the invention, but not to be considered in a limitative sense, wherein:
- Fig 1 shows a perspective view of a protection box according to the present invention, in the closed or operating position;
- Fig. 2 shows a lateral view of the protection box of Fig. 1;

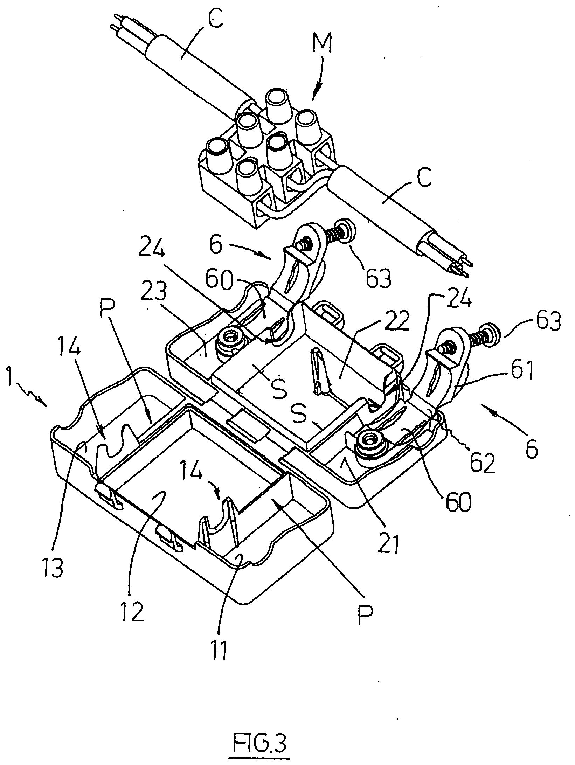

- Fig. 3 shows a perspective view of the protection box of Fig. 1 in an open configuration, that is to say, when it is ready to receive a terminal board through which the connections are made;
- Fig. 4 shows a top plan view of the protection box alone;
- Fig. 5 represents the elements of Fig. 3 with the terminal board introduced into the corresponding seat and with the electric cables or wires in the locked condition;
- Fig. 6 is a cross-section view of the group shown in Fig.5;
- Fig. 7 represents a detail concerning the fixing of the protection box according to the present invention to a support positioned underneath;

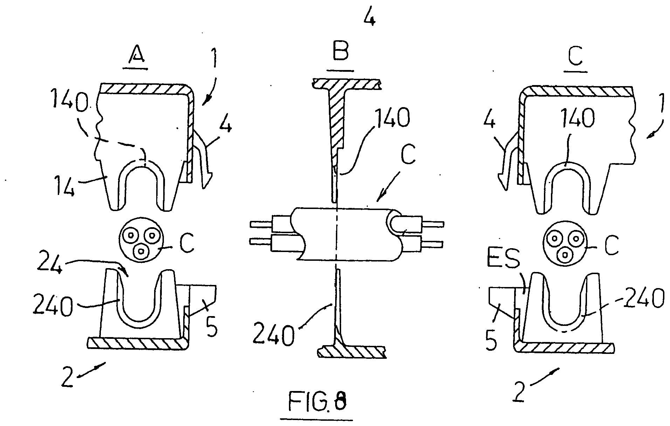

- Figs 8A-8C show three sectional views relative to the present protection box just before to be closed;
- Figs 9A-9B represent two sectional views relative to the present protection box when it is closed;
- Figs 10 and 11 represent two details of the present protection box in the closed position to show the surmounting edges of the two half shells.

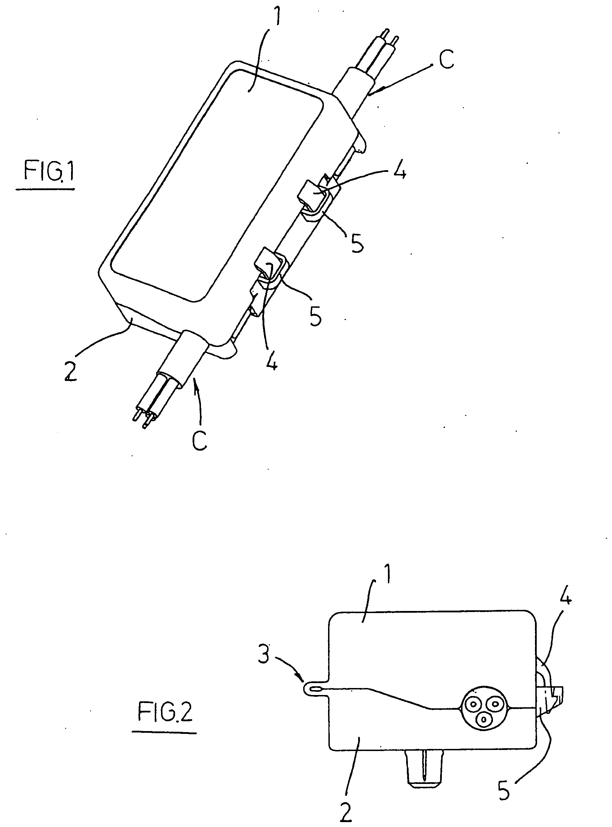

Reduced to its essential structure and with reference to the enclosed drawings, a protection box for electric connections according to the present invention comprises two half shells (1,2) each internally divided so as to provide three compartments (11, 12, 13; 21, 22, 23) separated form each other: for each half shell (1, 2) there are two end compartments (11, 13; 21, 23) and a central compartment (12, 22). The half shells (1,2) are joined to each other by means of a hinge consisting of two strings made of the same plastic material of which the two half shells (1,2) are made. On one of the external sides on the first half shell there are two hooks (4) which are destined to be hooked to two corresponding eyelets (5) jutting out of the homologous external side of the second half shell (2) when the protection box is in its closed position (as shown in Fig. 1 and in Fig.2).

On each of its sides (P) which separate it from the other compartments (11,13), the central compartment (12) of the first half shell (1) features a "U shaped" extension (14) which projects above its corresponding edge (EP). In practice, said extensions (14) define two "U"-shaped bodies projecting above the edges (EP) of the sides (P) separating the central compartment (12) of the first half shell (1) from the corresponding end compartments (11, 13).

Similarly, the central compartment (22) of the second half shell features a "U"-shaped cavity (24) on each of its sides (S) which separate it from the other two compartments (21, 23) and said cavity develops both above and underneath the corresponding edge (ES).

The extensions (14) of the first half shell (1) feature a depressed zone (140) facing the respective end compartments (11, 13) and the cavities (24) of the second half shell (2) feature a depressed zone (240) facing the inside of the corresponding central compartment (22).

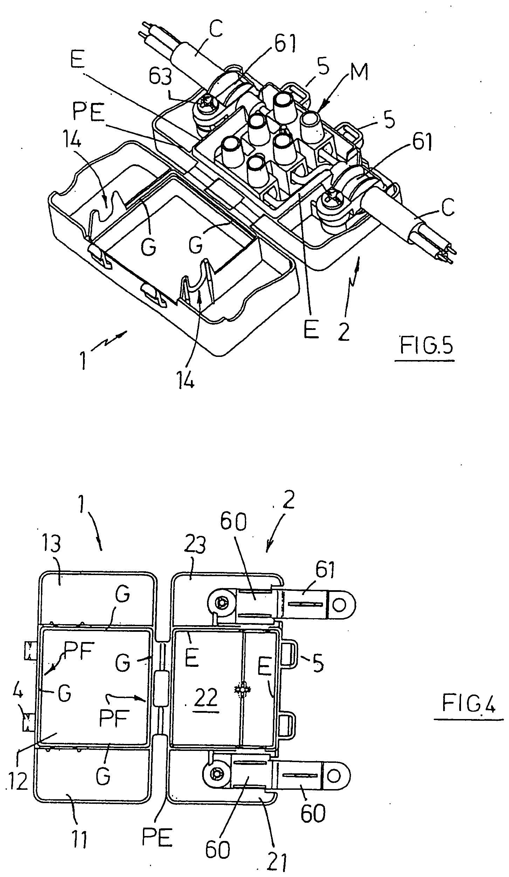

Moreover, as shown in Figs.4, 5, 10 and 11, said sides (P) of the central compartment (11) of the first half shell (1) and the other two sides (PF) of the same compartment feature a step (G) along their whole internal edge. In other terms, the upper edge of the four sides (P, PF) which delimit the central compartment (12) of the half shell (1) is step-shaped. The edge (E) of each of the four sides which delimit the central compartment (22) of the second half shell (2) is raised with respect to its perimetral edge (PE) of the latter.

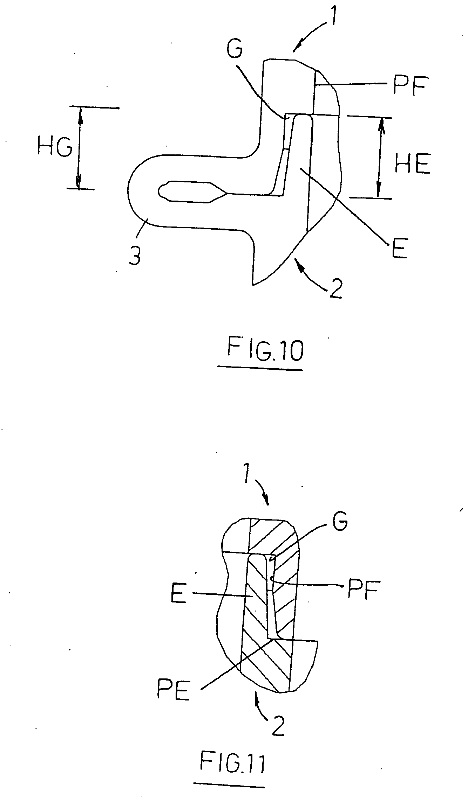

Therefore, as shown in Fig. 10 and Fig. 11, when the box is closed -by positioning the first half shell (1) onto the second half shell (2), in correspondence of the compartment provided by the overlapping of the central compartments (12, 22) of the two half shells- the step (G) covers the edge (E).

The nominal height (HG) of the step (G) and the nominal height (HE) of the raised edge (E) are identical to each other.

A cable clamp (6) is provided inside each of the two compartments (21, 23) of the second half shell (2).

Each of the two cable clamps (6) consists of two jaws (60, 61) joined to each other by means of a string hinge (62). One jaw (60) is fixed and is provided on the base of the corresponding compartment (21; 23). The other jaw (61) can rotate on the fixed jaw thanks to the hinge (62) . The free ends of the two jaws are pierced and can be clamped onto each other by means of a screw (63).

The protection box described above can be used as follows.

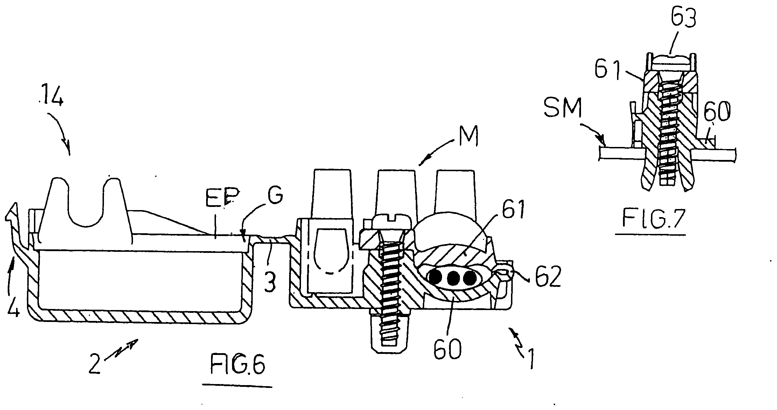

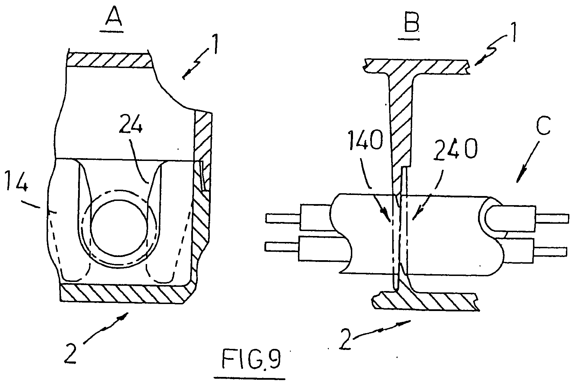

The block terminal or terminal junction box (M) which realises the electric connection among the wires of the cables (C) is positioned in the central compartment (22) of the second half shell (2) so that the cables (C) pass through the depressions (24) provided on the sides (S) of the compartment itself (22) and on the fixed jaws (60) of the cable clamps (6). Then. the cables (C) are locked by fixing each of the mobile jaws (61) onto the corresponding fixed jaw (60) by means of a corresponding screw (63). As shown in Fig. 7, the screw (63) can be used to fix the present protection box to a support underneath (SM). At this point, the first half shell (1) is positioned onto the second half shell (2). Thanks to the positioning of the first half shell onto the second half shell, the chamber provided by the overlapping of the compartments (12, 22) in which the block terminal or terminal junction box (M) is positioned, is spray resistant. In fact, the step (G) of the compartment (12) covers entirely the edge (E) of the compartment (22). Moreover, as shown in Fig. 9B, the surfaces of the said depressions (140) fit together with the homologous depressions (240) respectively provided by the extensions (14) and the cavities (24). Thanks to the said depressions (140) and (240), the extensions (14) and the cavities (24) are flexible, thus being capable of adapting their shape to the external diameter of the cables (C). At the same time, the cable clamps result closed within corresponding closed chambers defined by the overlapping of the end compartments (11, 13, 21, 23) of the two half shells.

It is to be understood that the drawing shows only an example provided solely as a practical demonstration of the invention, and that this invention may be varied in its forms and dispositions without departure from the scope of the guiding concept of the invention. The presence of any reference numbers in the enclosed claims has the purpose of facilitating the reading of the claims with reference to the description and to the drawing, and does not limit the scope of protection represented by the claims.

## Claims

1. Protection box for electric connections comprising a first and a second half shell (1,2) which can be hooked to each other and overlapped onto each other so as to form a box shaped body with a seat for an electric block terminal or terminal junction box (M), and internally provided with at least a cable clamp (6), **characterized in that** said at least one cable clamp (6) consists of two jaws (60, 61) joined to each other by means of a string hinge (62), one jaw (60) being fixed and being provided on the base of a corresponding compartment (21; 23) of one half shell (2), and the other jaw (61) can rotate on the fixed jaw (60) by means of said string hinge (62).

2. Protection box according to claim 1 **characterized in that** it is internally provided with two cable clamps.

3. Protection box according to claim 1 **characterized in that** said seat is provided by the overlapping of two compartments (12, 22) each of which is centrally provided by a corresponding half shell (1,2) and **in that** the sides which delimit one of said compartments surmount and cover the sides which delimit the other compartment.

4. Protection box for electric connections according to claim 1 **characterized in that** each of said half shells (1,2) is internally divided into three compartments (11,12,13; 21,22,23) so that each of the two half shells features two end compartments (11,13; 21,23) and a central compartment (12,22).

5. Protection box for electric connections according to claim 1 **characterized in that** said compartment (12) of the first half shell (1) features, on each of its sides, a "U" shaped extension which projects above its corresponding edge (EP) and **in that** said compartment (22) of the second half shell (2) features, on each of its sides, a "U" shaped cavity which develops both above and beyond its corresponding edge (ES).

6. Protection box for electric connections according to claim 5 **characterized in that** said extensions (14) of the first half shell (1) feature a depressed zone (140) facing the respective end compartments (11, 13) and the cavities (24) of the second half shell (2) feature a depressed zone (240) facing the inside of the corresponding central compartment (22).

7. Protection box for electric connections according to claim 3 **characterized in that** the sides (P,PF) of one of the said compartments (11) feature a step (G) along their whole edge and **in that** the edge (E) of the sides which delimit the other compartment (22) is raised with respect to the perimetral edge (PE) of the respective half shell (2).

8. Protection box for electric connections according to claim 3 **characterized in that** it is provided with two cable clamps (6), each of said cable clamps being provided externally and laterally to the said compartment (22) of one of the two half shells.

9. Protection box for electric connections according to claim 4 and 8 **characterized in that** each of said cable clamps is provided within a corresponding end compartment (21,23) of one of the two half shells.

10. Protection box according to claim 1 **characterized in that** the free ends of the two jaws (60, 61) are pierced and can be clamped onto each other by means of a screw (63).

## Patentansprüche

1. Schutzkasten für elektrische Anschlüsse, der eine erste und eine zweite Halbschale (1, 2) umfasst, die miteinander verhakt und einander überlagernd so angeordnet werden können, dass ein kastenartiger Körper gebildet wird, der einen Sitz für einen elektrischen Blockanschluss oder eine Anschluss-Verbindungsbox (M) aufweist und in seinem Inneren mit wenigstens einer Kabelklemme (6) versehen ist,
**dadurch gekennzeichnet, dass** die wenigstens eine Kabelklemme (6) aus zwei Backen (60, 61) besteht, die miteinander durch ein String-Gelenk (62) verbunden sind, wobei die eine Backe (60) an der Basis einer entsprechenden Kammer (21; 23) einer der Halbschalen (2) vorgesehen und befestigt ist, und die andere Backe (61) bezüglich der festen Backe (60) mithilfe des String-Gelenks (62) verschwenkt werden kann.

2. Schutzkasten nach Anspruch 1, **dadurch gekennzeichnet, dass** in seinem Inneren zwei Kabelklemmen vorgesehen sind.

3. Schutzkasten nach Anspruch 1, **dadurch gekennzeichnet, dass** der Sitz dadurch gebildet ist, dass sich zwei Kammern (12, 22) überlagern, von denen jede in einer entsprechenden Halbschale (1, 2) zentral ausgebildet ist, und dass die Seitenwände, welche die eine der beiden Kammern begrenzen, die Seitenwände ab- und überdecken, welche die andere der beiden Kammern begrenzen.

4. Schutzkasten für elektrische Anschlüsse nach Anspruch 1, **dadurch gekennzeichnet, dass** jede der Halbschalen (1, 2) im Inneren in drei Kammern (11, 12, 13; 21, 22, 23) so unterteilt ist, dass jede der beiden Halbschalen zwei End-Kammern (11, 13; 21, 23) und eine zentrale Kammer (12; 22) aufweist.

5. Schutzkasten für elektrische Anschlüsse nach Anspruch 1, **dadurch gekennzeichnet, dass** die Kammer (12) der ersten Halbschale (1) an jeder ihrer Seitenwände einen U-förmigen Fortsatz aufweist, der über die entsprechende Kante (EP) vorspringt, und dass die Kammer (22) der zweiten Halbschale (2) an jeder ihrer Seitenwände eine U-förmige Vertiefung aufweist, die sich sowohl oberhalb als auch jenseits der entsprechenden Kante (ES) erstreckt.

6. Schutzkasten für elektrische Anschlüsse nach Anspruch 5, **dadurch gekennzeichnet, dass** die Fortsätze (14) der ersten Halbschale (1) jeweils einen vertieften Bereich (140) aufweisen, welcher der betreffenden End-Kammer (11, 13) zugewandt ist, und dass die Vertiefungen (24) der zweiten Halbschale (2) jeweils einen vertieften Bereich (240) aufweisen, der dem Inneren der entsprechenden zentralen Kammer zugewandt ist.

7. Schutzkasten für elektrische Anschlüsse nach Anspruch 3, **dadurch gekennzeichnet, dass** die Seitenwände (P, PF) einer jeden der Kammern (11) längs ihres gesamten Randes (E) eine Stufe (G) aufweisen und dass der Rand (E) der Seitenwände, welche die andere Kammer (22) begrenzen, bezüglich des umlaufenden Randes (PE) der betreffenden Halbschale (2) erhöht ausgebildet ist.

8. Schutzkasten für elektrische Anschlüsse nach Anspruch 3, **dadurch gekennzeichnet, dass** sie mit zwei Kabelklemmen (6) versehen ist, von denen jede außerhalb und seitlich der besagten Kammer (22) der einen der beiden Halbschalen angeordnet ist.

9. Schutzkasten für elektrische Anschlüsse nach Anspruch 4 und 8, **dadurch gekennzeichnet, dass** jede der Kabelklemmen in einer entsprechenden End-Kammer (21, 23) einer der beiden Halbschalen angeordnet ist.

10. Schutzkasten nach Anspruch 1, **dadurch gekennzeichnet, dass** die freien Enden der beiden Backen (60, 61) durchbohrt sind und mithilfe einer Schraube (63) aneinander festgelegt werden können.

## Revendications

1. Boîte de protection pour connexions électriques, comprenant une première et une deuxième demi coque (1,2) qui peuvent être accrochées l'une à l'autre et superposables de façon à former une boîte avec un logement pour une connexion électrique (M) et pourvue à l'intérieur de au moins un dispositif de blocage des câbles (6) **caractérisée en ce que** ledit au moins dispositif de blocage des câbles (6) consiste en deux mâchoires (60, 61) unies entre elles par une charnière en forme de ruban (62), une mâchoire (60) étant fixe et étant pourvue sur la base d'un logement correspondant (21 ; 23), d'une demi coque (2), et l'autre mâchoire (61) peut tourner sur la mâchoire fixe (60) au moyen de ladite charnière en forme de ruban (62).

2. Boîte de protection selon la revendication 1 **caractérisée en ce que** est pourvue à l'intérieur de deux dispositifs de blocage des câbles.

3. Boîte de protection selon la revendication 1 **caractérisée en ce que** ledit logement est formé par la superposition de deux logements (12,22) chacun des quels est présenté en position centrale par une demi coque correspondante (1,2) et **en ce que** les cotés qui délimitent un desdits logements surmontent, et couvrent les cotés qui délimitent l'autre logement.

4. Boîte de protection pour connexions électriques selon la revendication 1 **caractérisée en ce que** chacune desdites demi coques (1,2) et subdivisée à l'intérieur en trois logements (11,12,13 ;21,22,23) ainsi que chacune des deux demi coques (1,2) a deux logement de about (11,131,23) et un logement central (12,22).

5. Boîte de protection pour connexions électriques selon la revendication 1 **caractérisée en ce que** ledit logement (12) de la première demi coque (1) présente, sur chacun de ses cotés (P), un appendice un forme de «U» laquelle se projette au dessus du bord relatif (EP) et **en ce que** ledit logement (22) de la deuxième demi coque (2), présente, sur chacun de ses cotés (S), une cavité en forme de «U» qui résulte développée au dessus et au delà du bord relatif (ES).

6. Boîte de protection pour connexions électriques selon la revendication 5 **caractérisée en ce que** lesdites appendices (14) de la première demi coque (1) présentent une zone latérale en dépression (140) tournée vers le logement de about respectif (11,13) pendant que lesdites cavités (24) de la deuxième demi coque (2) présentent une zone de dépression (240) tournée vers l'intérieure du logement central correspondant (22).

7. Boîte de protection pour connexions électriques selon la revendication 3 **caractérisée en ce que** les cotés (P, PF) d'un desdits logements (11) présentent un gradin (G) le long de tout leur bord externe et **en ce que** le bord (E) des cotés qui délimitent l'autre logement (22) de la demi coque (2) est surélevé par rapport au bord périmétral (PE) de la demi coque respective (2).

8. Boîte de protection pour connexions électriques selon la revendication 3 **caractérisée en ce que** présente deux dispositifs de blocage des câbles (6), chacun desquels est disposé extérieurement et latéralement audit logement (22) d'une des deux demi coques.

9. Boîte de protection pour connexions électriques selon la revendication 4 et 8 **caractérisée en ce que** chacun desdits dispositifs de blocage des câbles est logé dans un correspondant logement de about (21,23) de un des deux demi coques.

10. Boîte de protection pour connexions électriques selon la revendication 1 **caractérisée en ce que** les extrémités libres des deux mâchoires (60, 61) sont percées et peuvent être serrées l'une sur l'autre au moyens d'une vis (63).
